# EUROPÄISCHE PATENTSCHRIFT

(11) **EP 4 190 963 B1**
(45) Veröffentlichungstag und Bekanntmachung des Hinweises auf die Patenterteilung: **16.04.2025**
(21) Anmeldenummer: 22205087.4
(22) Anmeldetag: 02.11.2022
(51) Int. Cl.: D06F 39/08

(54) **SIPHON FÜR EIN WÄSCHEPFLEGEGERÄT**
SIPHON FOR A LAUNDRY CARE DEVICE
SIPHON POUR APPAREIL D'ENTRETIEN DU LINGE

(30) Priorität: 01.12.2021 DE 102021213577
(43) Veröffentlichungstag der Anmeldung: 07.06.2023
(73) Patentinhaber: BSH Hausgeräte GmbH, 81739 München (DE)
(72) Erfinder: Flohe, Daniel, 13353 Berlin (DE); Sabalat, Andre, 10555 Berlin (DE); Schlitzer, Alexander, 13503 Berlin (DE); Trampe, Michael, 15517 Fürstenwalde (DE)

(56) Entgegenhaltungen:
- US-A1- 2009 260 404
- US-A1- 2019 024 293

## Beschreibung

Die vorliegende Erfindung betrifft einen Siphon für ein Wäschepflegegerät und ein Wäschepflegegerät.

Eine Wasserzufuhr für Wäschepflegegeräte unterliegt verschiedenen normativen und praktisch-funktionsbedingten Anforderungen. Beispielsweise ist es gemäß der DIN EN 61770 vorgeschrieben, eine Sicherungsvorkehrung vorzusehen, die, beispielsweise bei Unterdruck in der Wasserzufuhrleitung, ein Zurücksaugen von gebrauchtem bzw. verschmutztem Wasser in die Wasserzufuhrleitung und damit insbesondere in die Trinkwasserversorgung eines Haushalts verhindert. Des Weiteren ist es wünschenswert, beispielsweise bei einem verstopften Abfluss in dem Wäschepflegegeräte oder stromabwärts davon einen Rückstau von Wasser bis in die Wasserzufuhrleitung verhindern zu können. Im Stand der Technik ist es üblich, zu diesem Zweck einen Luftspalt (auch als Air-Gap bezeichnet) vorzusehen, welcher einen Druckausgleich ermöglicht und somit ein Ansaugen von verschmutztem Wasser verhindert. Der Luftspalt stellt eine Unterbrechung der ansonsten nach außen abgeschlossenen Wasserzuleitung und eine Verbindung zu einer Umgebung dar. Beispielsweise kann der Luftspalt in einer Waschmittelschublade zwischen der Einspülschale und einer Wasserzufuhr angeordnet sein. Durch die Verbindung mit der Umgebung besteht jedoch grundsätzlich die Möglichkeit, dass beispielsweise kondensiertes Wasser oder heißer Dampf aus einem Behandlungsraum des Wäschepflegegeräts in die Umgebung gelangt. Dadurch können Beschädigungen an Komponenten des Wäschepflegegeräts und/oder an Gegenständen in der Umgebung verursacht werden. Des Weiteren kann ein Austritt von kondensiertem Wasser, Dampf etc. Unannehmlichkeiten für einen Nutzer des Wäschepflegegeräts verursachen. Im Stand der Technik ist es deshalb üblich, einen Siphon vorzusehen, der einen solchen Austritt verhindert. Typischerweise ist der Siphon unterhalb der Waschmittelschublade und/oder in einem Zulauf-Faltenbalg angeordnet und insbesondere U- oder V-förmig ausgebildet.

Insbesondere vor dem Hintergrund automatischer Dosiersysteme, für die eventuell gar keine Waschmittelschublade mehr notwendig ist, ist es jedoch wünschenswert, alternative und ggf. optimierte Lösungen zu finden. Insbesondere ist es vorteilhaft, den Platzbedarf bekannter Systeme aus Siphon und/oder Einspülschale zu verringern, um den freigewordenen Bauraum für andere Zwecke und/oder zu Gunsten einer Verkleinerung des Wäschepflegegeräts zu nutzen.

Die US 2019 024 293 AA zeigt ein Wäschepflegegerät, mit einer Waschmitteldosierschale. Die Dosierschale sitzt in einer Aufnahmeschale, wobei durch die Anordnung der beiden ein Siphon ausgebildet ist, der dafür sorgt, dass die Aufnahmeschale nahezuvollständig entleert wird.

Die US 2009 260 404 AA zeigt ebenfalls ein Wäschepflegegerät mit einem Siphon, der in einer Waschmittelkammer ausgebildet ist, und dazu dient, diese Kammer nahezu vollständig zu entleeren.

Es ist daher eine Aufgabe der vorliegenden Erfindung, eine alternative, zuverlässige und Bauraum einsparende Vorrichtung bereitzustellen, womit gleichermaßen ein Zurücksaugen von gebrauchtem bzw. verschmutztem Wasser in die Wasserzufuhrleitung und ein Austritt von kondensiertem Wasser, Dampf etc. in die Umgebung verhindert werden kann.

Diese Aufgabe wird gelöst durch einen Siphon mit den Merkmalen des Anspruchs 1 und ein Wäschepflegegerät mit den Merkmalen des Anspruchs 10. Weitere Vorteile und Merkmale der Erfindung ergeben sich aus den Unteransprüchen sowie der Beschreibung und den beigefügten Figuren.

Gemäß einem ersten Aspekt der vorliegenden Erfindung ist ein Siphon für die Anordnung in einem Wäschepflegegerät mit oder ohne Waschmittelschublade vorgesehen. Der Siphon umfasst ein erstes Rohrelement umfassend in einer Längsrichtung ein erstes Ende und ein zweites Ende, ein zumindest abschnittsweise in dem ersten Rohrelement angeordnetes und/oder anordenbares zweites Rohrelement mit einem dem ersten Ende zugewandten und von diesem beabstandeten Siphonende und einem dem Siphonende gegenüberliegenden Außenende, eine in dem zweiten Rohrelement zwischen dem Siphonende und dem Außenende angeordnete und das zweite Rohrelement abdichtende Deckelplatte, ein zumindest abschnittsweise in dem ersten Rohrelement und zumindest abschnittsweise in dem zweiten Rohrelement angeordnetes drittes Rohrelement mit einem dem zweiten Ende und der Deckelplatte zugewandten und von der Deckelplatte beabstandeten Eingangsende und einem dem Eingangsende gegenüberliegenden Ausgangsende, und eine in einen Bereich zwischen dem ersten Rohrelement und dem zweiten Rohrelement führende Fluideinlassöffnung sowie eine aus diesem Bereich führende Überflussöffnung, wobei das erste Rohrelement an seinem ersten Ende eine Bodenplatte mit einer Bodenöffnung umfasst, wobei sich das dritte Rohrelement fluidabdichtend durch die Bodenöffnung erstreckt, wobei die Überflussöffnung in Längsrichtung gesehen zwischen dem Eingangsende des dritten Rohrelements und der Fluideinlassöffnung angeordnet ist.

Der erfindungsgemäße Siphon kann für Wäschepflegegeräte mit einer automatischen Waschmitteldosierfunktion, insbesondere für Wäschepflegegeräte ohne Waschmittelschublade, vorgesehen sein. Vorteilhafterweise kann der erfindungsgemäße Siphon ein sehr kompaktes und konstruktionstechnisch einfach umsetzbares Design bieten. Insbesondere hat sich gezeigt, dass im Vergleich zu im Stand der Technik verwendeten Vorrichtungen eine geringere Breite des Siphons realisierbar sein kann. Beispielsweise kann der erfindungsgemäße Siphon, inklusive seiner Fluideinlassöffnung und seiner Überflussöffnung, um ungefähr 40% schmaler ausgebildet sein als eine entsprechende Vorrichtung aus dem Stand der Technik. Durch das rohrförmige Design der Komponenten des Siphons kann zudem eine zuverlässige Durchlässigkeit mit einem niedrigeren Strömungswiderstand verglichen mit dem Stand der Technik ermöglicht werden. Der Siphon kann optional auch für Wäschepflegegeräte mit Waschmittelschublade verwendet werden.

Die Längsrichtung entspricht vorzugsweise im Wesentlichen der Richtung der Erdanziehungskraft, wenn der Siphon in einem Wäschepflegegerät eingebaut ist und das Wäschepflegegerät einsatzbereit aufgestellt ist. Der Begriff "im Wesentlichen" bezeichnet hier und im Folgenden insbesondere eine Abweichung von weniger als 10°, bevorzugt weniger als 5° und besonders bevorzugt weniger als 3°, wobei in jedem Fall auch eine Abweichung von 0° umfasst ist. Bei anderen Angaben, insbesondere Abstands-, Verhältnis-, Flächen- oder Längenangaben, bedeutet "im Wesentlichen" eine Abweichung von weniger als 15%, bevorzugt weniger als 10%, besonders bevorzugt weniger als 5%. Die Längsrichtung ist vorzugsweise im Wesentlichen parallel zu einer Mittelachse zumindest eines Abschnitts des ersten Rohrelements ausgerichtet. Der Abschnitt umfasst insbesondere den Teil des ersten Rohrelements in dem das zweite Rohrelement und/oder das zweite Rohrelement angeordnet sind. Gemäß einer bevorzugten Ausführungsform kann das erste Rohrelement gerade ausgebildet sein, wobei insbesondere die Mittelachse des ersten Rohrelements im Wesentlichen parallel zu der Längsrichtung ausgerichtet sein kann. Im Rahmen dieser Erfindung kann eine Querrichtung eine zu der Längsrichtung senkrechte Richtung angeben. Die Querrichtung kann mit einer Radialrichtung identisch sein, insbesondere, wenn das erste, zweite und/oder dritte Rohrelement zylinderförmig ausgebildet ist und/oder einen zumindest abschnittsweise kreisförmigen Querschnitt aufweist. Das erste Rohrelement weist vorzugsweise eine Erstreckung in Querrichtung auf, die zu einer Erstreckung des ersten Rohrelements in Längsrichtung in einem Verhältnis von 0,3 bis 1,5, bevorzugt 0,6 bis 1,0, besonders bevorzugt 0,8 bis 0,9 steht. Dieses Verhältnis kann besonders günstig hinsichtlich einer Kompaktheit des ersten Rohrelements sein. Zudem kann gerade ein Verhältnis von 0,8 bis 0,9 eine gute Durchlässigkeit und/oder eine geringe Verstopfungsgefahr des Siphons ermöglichen. Das erste Ende kann vorzugsweise gegenüberliegend dem zweiten Ende angeordnet sein. Vorzugsweise kann eine Querschnittsfläche des ersten Endes im Wesentlichen parallel zu einer Querschnittsfläche des zweiten Endes angeordnet sein. Unter der Querschnittsfläche eines Endes kann im Rahmen dieser Erfindung die durch den Umfang des Endes begrenzte, insbesondere ebene, Fläche angenommen werden. Insbesondere bei einem im Wesentlichen geraden Rohrelement kann die Normale der Querschnittsfläche parallel zu der geraden Erstreckung des Rohrelements verlaufen. Alternativ und/oder zusätzlich kann die Normale der Querschnittsfläche parallel zu der Mittelachse des Rohrelements im Bereich des jeweiligen Endes verlaufen. Das erste Rohrelement kann, zumindest Abschnittsweise, einen im Wesentlichen konstanten Innenquerschnitt aufweisen. Der Innenquerschnitt des ersten Rohrelements kann über den gesamten Bereich des ersten Rohrelements im Wesentlichen konstant sein mit Ausnahme eines Abschnitts am ersten Ende und/oder eines Abschnitts am zweiten Ende. Der Abschnitt kann beispielsweise 1% bis 15% der Erstreckung des ersten Rohrelements in Längsrichtung ausmachen. Beispielsweise kann das erste Rohrelement einen im Abschnitt des ersten Endes und/oder des zweiten Endes geringeren und/oder sich verjüngenden Innenquerschnitt aufweisen.

Das zweite Rohrelement kann ein Siphonende und ein dem Siphonende gegenüberliegendes Außenende aufweisen. Vorzugsweise kann zumindest der Abschnitt des zweiten Rohrelements, welcher in dem ersten Rohrelement angeordnet ist, im Wesentlichen gerade, insbesondere im Wesentlichen parallel zu der Längsrichtung, ausgestaltet sein. Dies kann vorteilhafterweise eine den Durchfluss durch den Siphon wenig behindernde Ausführung sein. Mit anderen Worten kann somit eine Fließwiderstand geringgehalten werden. Besonders bevorzugt kann das komplette zweite Rohrelement im Wesentlichen gerade ausgestaltet sein. Insbesondere kann eine Mittelachse des zweiten Rohrelements im Wesentlichen parallel zu der Längsachse verlaufen. Dies kann einen besonders einfach herstellbaren und platzsparenden Siphon ermöglichen. Vorzugsweise kann das Siphonende in dem ersten Rohrelement angeordnet sein. Das Siphonende ist dem ersten Ende zugewandt. "Zugewandt" kann dabei insbesondere bedeuten, dass eine von dem zweiten Rohrelement wegweisende Normale einer Querschnittsfläche des Siphonendes auf eine Querschnittsfläche des ersten Endes weist und/oder dass die Normale bzw. eine Verlängerung der Normalen die Querschnittsfläche des ersten Endes schneidet. Vorzugsweise kann die Normale mittig auf der Querschnittsfläche angeordnet sein. Eine analoge Definition kann auch hinsichtlich anderer Enden, die als einander zugewandt bezeichnet werden, angewandt werden. Die Querschnittsfläche des Siphonendes kann im Wesentlichen parallel zu der Querschnittsfläche des ersten Endes des ersten Rohrelements angeordnet und/oder anordenbar sein. "Anordenbar", hier mit Bezug auf das zweite Rohrelement und/oder das Siphonende, kann im Rahmen dieser Erfindung derart aufzufassen sein, dass das zweite Rohrelement und/oder das Siphonende sowie das erste Rohrelement derart ausgestaltet sind, dass ein Zusammensetzen dieser beiden Rohrelemente durch zumindest ein entsprechendes Sicherungselement auf eine vorgegebene Weise geschieht bzw. geschehen kann. Dies kann insbesondere gelten, wenn das erste Rohrelement und das zweite Rohrelement separate Bauteile sind. Sicherungselemente können beispielsweise Rücksprünge und/oder Vorsprünge des ersten Rohrelements und/oder des zweiten Rohrelements sein. Beispielsweise kann das erste Rohrelement ein erstes Sicherungselement aufweisen und das zweite Rohrelement kann ein dazu passendes zweites Sicherungselement aufweisen. Vorzugsweise kann das zumindest eine Sicherungselement an dem Außenende und/oder an dem zweiten Ende bzw. im Bereich des zweiten Endes angeordnet sein. "Im Bereich des zweiten Endes" kann dabei bedeuten, dass das zumindest eine Sicherungselement näher an dem zweiten Ende ist als an dem ersten Ende, jedoch von dem zweiten Ende beabstandet ist. Dadurch kann ein sicherer Halt zwischen den Rohrelementen erreicht sein. Das Siphonende kann eine, insbesondere bogenförmige, Haltelasche umfassen. Die Haltelasche kann vorzugsweise starr ausgebildet sein. Die Haltelasche kann insbesondere um den gesamten Umfang des Außenendes und/oder zumindest um einen Großteil des Umfangs des Außenendes umlaufend ausgestaltet sein kann. Die Haltelasche kann bogenförmig radial nach außen von dem zweiten Rohrelement abstehen. Die Haltelasche kann zwei zueinander im Wesentlichen rechtwinklige Abschnitte umfassen. Die Haltelasche kann an das zweite Rohrelement in einem im Wesentlichen rechten Winkel anschließen. Das erste Rohrelement kann einen Vorsprung aufweisen, insbesondere umlaufend um zumindest einen Teil des Umfangs des ersten Rohrelements. Der Vorsprung kann von dem zweiten Ende beabstandet sein und/oder näher an dem zweiten Ende angeordnet sein als an dem ersten Ende. Der Abstand des Vorsprungs von dem zweiten Ende in Längsrichtung gesehen kann zu der Gesamterstreckung des ersten Rohrelements in Längsrichtung in einem Verhältnis von 0,01 bis 0,49, bevorzugt 0,05 bis 0,4, besonders bevorzugt 0,1 bis 0,2, stehen. Der Vorsprung kann dazu ausgestaltet sein, bei einem Zusammensetzen des ersten und zweiten Rohrelements mit der Haltelasche zusammenzuwirken. Insbesondere kann der Vorsprung dazu ausgestaltet sein, als Begrenzung der Positionierung der Haltelasche und/oder dem Fixieren der Haltelasche zu dienen. Das Außenende und das zweite Ende können zueinander in Längsrichtung gesehen im Wesentlichen bündig abschließend angeordnet und/oder anordenbar sein. Vorzugsweise kann das zweite Rohrelement und/oder zumindest der Abschnitt des zweiten Rohrelements, der in dem ersten Rohrelement angeordnet ist, in Querrichtung gesehen zu dem ersten Rohrelement beabstandet sein, insbesondere in allen zu der Längsrichtung quer verlaufenden Richtungen im Wesentlichen gleichmäßig beabstandet sein. Das zweite Rohrelement kann vorzugsweise eine Erstreckung in Querrichtung aufweisen, die zu einer Erstreckung des zweiten Rohrelements in Längsrichtung in einem Verhältnis von 0,2 bis 1,5, bevorzugt 0,5 bis 1,0, besonders bevorzugt 0,7 bis 0,9 steht. Insbesondere im Zusammenspiel mit dem oben genannten Größenverhältnis des ersten Rohrelements und/oder mit den weiter unten genannten Größenverhältnissen des dritten Rohrelements kann dieses Verhältnis besonders günstig hinsichtlich einer guten Durchlässigkeit des Siphons sein.

Das dritte Rohrelement kann ein Eingangsende und ein Ausgangsende aufweisen. Das Eingangsende und das Ausgangsende können sich in der Längsrichtung diametral gegenüberliegen. Somit kann ein guter Fluidfluss zwischen beiden Enden sichergestellt sein. Das Eingangsende kann vorzugsweise in dem ersten Rohrelement und/oder in dem zweiten Rohrelement angeordnet sein. Die Querschnittsfläche des Eingangsendes kann parallel zu der Querschnittsfläche des zweiten Endes und/oder des ersten Endes des ersten Rohrelements angeordnet sein. Eine Erstreckung des Abschnitts des dritten Rohrelements, welcher in dem zweiten Rohrelement angeordnet ist, in Längsrichtung kann zu einem Abstand zwischen der Bodenplatte und dem Siphonende in Längsrichtung in einem Verhältnis von 0,1 bis 2,0, bevorzugt 0,5 bis 1,5 besonders bevorzugt 1,0 bis 1,2, stehen. Vorteilhafterweise kann mit einem solchen Verhältnis ein Verstopfen des Siphons, beispielsweise durch Wäschebehandlungsmittel, besonders gut verhinderbar sein. Vorzugsweise kann zumindest der Abschnitt des dritten Rohrelements, welcher in dem ersten Rohrelement und/oder in dem ersten Rohrelement angeordnet ist, im Wesentlichen gerade, insbesondere im Wesentlichen parallel zu der Längsrichtung, ausgestaltet sein. Sind das erste Rohrelement sowie zumindest die Abschnitte der anderen beiden Rohrelemente, welche in dem ersten Rohrelement angeordnet sind, gerade ausgestaltet, kann vorteilhafterweise eine den Durchfluss durch den Siphon wenig behindernde Ausführung ermöglicht sein. Besonders bevorzugt kann das komplette dritte Rohrelement im Wesentlichen gerade ausgestaltet sein. Insbesondere kann eine Mittelachse des dritten Rohrelements im Wesentlichen parallel zu der Längsachse verlaufen. Ein gerades drittes Rohrelement kann einen weitgehend unbehinderten Durchfluss durch das dritte Rohrelement, welches insbesondere in Fließrichtung gesehen den letzten Abschnitt des Siphons bildet, ermöglichen. Vorzugsweise können die Mittelachsen des ersten, zweiten und dritten Rohrelements zumindest bereichsweise im Wesentlichen parallel zueinander verlaufen. Mit anderen Worten kann eine Längserstreckung der drei Rohrelement zumindest bereichsweise im Wesentlichen parallel zueinander sein. Die Querschnitte der drei Rohrelemente können eine qualitativ ähnliche, insbesondere im Wesentlichen identische, geometrische Form aufweisen, wobei sich die Maße der Querschnitte vorzugsweise unterscheiden können. Die Querschnittsfläche des zweiten Rohrelements kann zumindest in dem Bereich, in dem das erste Rohrelement angeordnet ist, größer als die Querschnittsfläche des ersten Rohrelements und kleiner als die Querschnittsfläche des ersten Rohrelements sein. Der Begriff "bereichsweise" kann sich dabei insbesondere auf den Abschnitt der Rohrelemente beziehen, welche ineinander angeordnet sind. Vorzugsweise kann das dritte Rohrelement in Querrichtung gesehen zu dem zweiten Rohrelement beabstandet sein, insbesondere in allen zu der Längsrichtung quer verlaufenden Richtungen im Wesentlichen gleichmäßig beabstandet sein. Das dritte Rohrelement kann vorzugsweise eine, zumindest mittlere, Erstreckung in Querrichtung aufweisen, die zu einer Erstreckung des dritten Rohrelements in Längsrichtung in einem Verhältnis von 0,1 bis 1,5, bevorzugt 0,4 bis 1,0, steht. Das Ausgangsende des dritten Rohrelements kann bündig abschließend mit dem ersten Rohrelement ausgebildet sein. Dadurch kann eine besonders kompakte Bauform ermöglicht sein. Bei einem bündig mit dem ersten Ende abschließenden Ausgangsende kann das dritte Rohrelement besonders bevorzugt eine Erstreckung in Querrichtung aufweisen, die zu einer Erstreckung des dritten Rohrelements in Längsrichtung in einem Verhältnis von 0,6 bis 1,0, ganz besonders bevorzugt 0,7 bis 0,9, steht. Alternativ kann das Ausgangsende außerhalb des ersten Rohrelements und beabstandet von dem ersten Rohrelement angeordnet sein. Mit anderen Worten kann sich das dritte Rohrelement jenseits des ersten Endes über das erste Rohrelement hinaus erstrecken. Vorteilhafterweise kann das dritte Rohrelement beispielsweise für eine Anbindung einer weiterführenden Fluidleitung, beispielsweise einem Wellbalg, ausgestaltet und/oder geeignet sein. Ist das Außenende außerhalb des ersten Rohrelements angeordnet, kann das dritte Rohrelement besonders bevorzugt eine Erstreckung in Querrichtung aufweisen, die zu einer Erstreckung des dritten Rohrelements in Längsrichtung in einem Verhältnis von 0,4 bis 0,9, ganz besonders bevorzugt 0,5 bis 0,6, steht. Das dritte Rohrelement kann einstückig mit dem ersten Rohrelement ausgebildet sein und/oder derart mit dem ersten Rohrelement verbunden sein, dass eine Trennung nicht reversibel bzw. nicht zerstörungsfrei möglich ist. Beispielsweise kann das dritte Rohrelement an die Seitenränder der Bodenöffnung der Bodenplatte geschweißt sein. Es kann vorzugsweise vorgesehen sein, dass das dritte Rohrelement nicht mit dem zweiten Rohrelement in direktem Kontakt ist. Insbesondere kann es vorgesehen sein, dass das dritte Rohrelement nur mit der Bodenplatte in direktem Kontakt ist, jedoch mit keinem anderen Element des Siphons. Das erste Rohrelement, das zweite Rohrelement und/oder das dritte Rohrelement kann oder können zumindest abschnittsweise einen abgerundeten, insbesondere kreisförmigen Querschnitt aufweisen. Der Querschnitt des dritten Rohrelements kann sich in Längsrichtung zu dem ersten Ende hin verjüngend ausgebildet sein. Durch eine verjüngende Ausbildung kann beispielsweise eine verbesserter Strömungsfluss ermöglicht sein. Daher kann der hoher Durchfluss durch den Siphon bereits bei einem geringen Wasserdruck erreicht werden. Zusätzlich oder alternativ kann der Querschnitt des zweiten und/oder des dritten Rohrelements in Längsrichtung im Wesentlichen konstant sein.

Die Bodenplatte des ersten Rohrelements kann eine Bodenöffnung aufweisen, durch welche sich das dritte Rohrelement fluidabdichtend erstreckt. Fluidabdichtend kann dabei bedeuten, dass ein Rand der Bodenöffnung fluiddicht an eine Außenwand des dritten Rohrelements anschließt oder mit dieser direkt in Kontakt steht. Mit anderen Worten können die Bodenöffnung und das dritte Rohrelement derart ausgestaltet und angeordnet sein, dass ein Fluid nicht zwischen dem Rand der Bodenöffnung und der Außenwand des dritten Rohrelements hindurchgelangen kann. Ein Fluid im Sinne dieser Erfindung kann beispielsweise Wasser und/oder ein Wasser-Wäschebehandlungsmittel-Gemisch sein. Zusätzlich oder alternativ kann ein Fluid beispielsweise Wasserdampf und/oder kondensiertes Wasser sein, der/das z.B. in einem Behandlungsraum des Wäschepflegegeräts entstehen kann. Vorzugsweise weist die Bodenplatte außer der Bodenöffnung keinerlei weitere Öffnung auf und/oder schließt die Querschnittsfläche des ersten Endes bis auf die Bodenöffnung, insbesondere fluiddicht, komplett ab. Somit kann das erste Rohrelement eine becherartige Struktur aufweisen. Insbesondere kann ein Fluidweg durch das erste Ende des ersten Rohrelements ausschließlich durch das dritte Rohrelement, insbesondere von dem Eingangsende zu dem Ausgangsende, ermöglicht sein. Das erste Rohrelement und das dritte Rohrelement können integral miteinander ausgebildet sein. Somit kann eine Herstellung des Siphons aufgrund weniger Einzelteile effizient sein.

Die Deckelplatte kann zwischen dem Siphonende und dem Außenende angeordnet sein und das zweite Rohrelement, insbesondere in einer Längsrichtung, abdichten. Vorzugsweise kann dies bedeuten, dass die Deckelplatte an ihrer Position in dem zweiten Rohrelement den kompletten Querschnitt des zweiten Rohrelements fluiddicht bedeckt bzw. abschließt, insbesondere derart, dass ein Fluid nicht durch das zweite Rohrelement von dem Siphonende zu dem Ausgangsende gelangen kann. Die Deckelplatte kann vorzugsweise eben ausgebildet sein und insbesondere parallel zu der Querschnittsfläche des Siphonendes und/oder des Eingangsendes des ersten Rohrelements ausgerichtet sein. Die Deckelplatte ist insbesondere zwischen dem ersten Endes des ersten Rohrelements und dem zweiten Ende des ersten Rohrelements angeordnet.

Die Fluideinlassöffnung kann in einen Bereich zwischen dem ersten Rohrelement und dem zweiten Rohrelement führen. Mit anderen Worten ist die Fluideinlassöffnung insbesondere derart angeordnet, dass ein durch sie in den Siphon eingelassenes Fluid zunächst direkt in den Bereich zwischen dem ersten Rohrelement und dem zweiten Rohrelement gelangt. Die Fluideinlassöffnung kann rund, insbesondere kreisrund und/oder elliptisch ausgebildet sein. Die Fluideinlassöffnung kann dazu ausgestaltet sein, an eine Fluidzuleitung, z.B. einer Wasserversorgung eines Haushalts, anschließbar zu sein. An die Fluideinlassöffnung kann, insbesondere an einer Außenseite des Siphons, ein Zuleitungsrohrabschnitt fluiddicht angeschlossen sein. Der Zuleitungsrohrabschnitt kann beispielsweise gekrümmt ausgestaltet sein. Die Normale der Querschnittsfläche einer Eintrittsöffnung des Zuleitungsrohrabschnitts kann zu der Normalen der Querschnittsfläche der Fluideinlassöffnung im Wesentlichen quer (z.B. orthogonal) ausgerichtet sein. Vorteilhafterweise kann ein gekrümmter Zuleitungsrohrabschnitt eine platzsparende Anbindung einer Fluidzuleitung an den Siphon ermöglichen. Die Fluideinlassöffnung kann im Bereich des zweiten Endes angeordnet sein. Insbesondere kann, in Längsrichtung gesehen, die Fluideinlassöffnung in einem Bereich angeordnet sein, dessen Abstand zu dem zweiten Ende zu dessen Abstand zu dem ersten Ende in einem Verhältnis von 0 bis 0,5, bevorzugt 0 bis 0,3 besonders bevorzugt 0 bis 0,2, steht. Somit kann zuverlässig verhindert werden, dass Gase durch den Siphon gelangen. Die Fluideinlassöffnung kann vorzugsweise in Längsrichtung gesehen näher an dem zweiten Ende angeordnet sein als das Eingangsende des dritten Rohrelements und/oder als die Deckelplatte. Vorteilhafterweise kann ein Querschnitt der Fluideinlassöffnung im Wesentlichen parallel zu einem Öffnungsquerschnitt des zweiten Endes ausgerichtet sein. Die Fluideinlassöffnung kann an der Haltelasche angeordnet sein. Insbesondere kann die Haltelasche eine Öffnung aufweisen, die der Fluideinlassöffnung entspricht und/oder durch die die Fluideinlassöffnung führt. Vorzugsweise kann die Fluideinlassöffnung auf einer Oberfläche der Haltelasche angeordnet sein, deren Normale im Wesentlichen parallel zu der Längsrichtung ausgerichtet ist.

Durch die Bodenplatte, das erste Rohrelement, das zweite Rohrelement, das dritte Rohrelement und die Deckelplatte kann ein funktioneller Siphonabschnitt gebildet ausgebildet sein, welcher einen Durchtritt von Dampf bzw. von kondensierter Flüssigkeit von dem Ausgangsende zu dem zweiten Ende verhindern kann. Im Folgenden wird eine bevorzugte Funktion des Siphons in seiner Betriebsstellung erläutert. Dabei kann die Bodenplatte einen unteren Teil des Siphonabschnitts darstellen, in dem sich bei Fluidzufuhr Fluid sammeln kann und die Deckelplatte stellt einen oberen Teil des Siphonabschnitts dar, unter dem sich gegebenenfalls Dampf oder Gase ansammeln können. Eine Flüssigkeit, welche durch die Fluideinlassöffnung in den Siphon gelangt, kann zunächst zwischen dem ersten Rohrelement und dem zweiten Rohrelement nach unten bis zu der Bodenplatte geleitet werden. Durch den Flüssigkeitsdruck kann die Flüssigkeit zwischen dem zweiten Rohrelement und dem dritten Rohrelement nach oben steigen, bis das Eingangsende des dritten Rohrelements erreicht ist. Von dort kann die Flüssigkeit dann durch das dritte Rohrelement zu dem Ausgangsende gelangen, von dem es, z.B. durch einen Einfüllschlauch, weitergeleitet werden kann, insbesondere in einen Behandlungsraum des Wäschepflegegeräts.

Die Überflussöffnung ist vorzugsweise dazu ausgestaltet, als Überlauf- und/oder Rücksaugschutz zu dienen. Dies kann insbesondere dadurch ermöglicht sein, dass die Überflussöffnung in Längsrichtung gesehen zwischen dem Siphonende und der Fluideinlassöffnung angeordnet sein kann. Vorzugsweise ist die Überflussöffnung in Längsrichtung gesehen von der Fluideinlassöffnung beabstandet. Ein Abstand der Überflussöffnung in Längsrichtung von der Fluideinlassöffnung und/oder zu dem ersten Ende (wobei insbesondere von der jeweils nächsten Kante der Überflussöffnung ausgegangen wird) kann zu einem Abstand des ersten Endes von dem zweiten Ende vorzugsweise in einem Verhältnis von 0,1 bis 0,3 stehen. Vorteilhafterweise kann beispielsweise, wenn in einer zu der Fluideinlassöffnung führenden Wasserleitung ein Unterdruck entsteht, dieser Unterdruck durch die Überflussöffnung ausgeglichen werden, sodass ein Ansaugen von Fluid bzw. Flüssigkeit aus dem dritten Rohrelement, verhindert werden kann. Tritt andererseits beispielsweise ein Fluid durch das Ausgangsende in den Siphon ein, beispielsweise aufgrund einer verstopften Abflussleitung des Wäschepflegegeräts, so kann durch die Überflussöffnung verhindert werden, dass das Fluid in die Fluideinlassöffnung und damit in die Wasserversorgung gelangt. Mit anderen Worten kann bei einem Ansteigen des Fluidpegels innerhalb des Siphons die Überflussöffnung verhindern, dass das Fluid in die Fluideinlassöffnung gelangt, weil das Fluid zuvor durch die Überflussöffnung austritt. Während Wäschepflegegeräte aus de Stand der Technik den Luftspalt vorzugsweise durch einen Bereich oberhalb der Einspülschale bereitstellen, kann erfindungsgemäß ein Luftspalt durch die Überflussöffnung bereitgestellt werden. Dies kann zum einen platzsparender als bei Vorrichtungen gemäß dem Stand der Technik sein und zum anderen kann somit auf eine Einspülschale verzichtet werden, was beispielsweise bei automatischen Dosiersystemen im Zuge einer weiteren Automatisierung vorteilhaft sein kann. Vorzugsweise kann die Überflussöffnung mit der Fluideinlassöffnung in Kommunikation stehen. Somit kann zuverlässig ein Ansaugen von Fluid aus dem Siphon in die Fluideinlassöffnung verhindert werden.

Zusätzlich oder alternativ kann die Überflussöffnung zwischen dem Siphonende und dem zweiten Ende des ersten Rohrelements angeordnet sein. Dadurch kann es verhinderbar sein, dass ein Fluid, beispielsweise Wasser oder ein Wassergemisch, bei der Zuleitung durch die Fluideinlassöffnung durch die Überflussöffnung aus dem Siphon austritt, wenn kein Überlauf bzw. Rückstau in dem Wäschepflegegerät vorliegt. Unter einem Wassergemisch kann im Rahmen dieser Erfindung eine Mischung aus Wasser und zumindest einem weiteren Stoff verstanden werden. Insbesondere kann der zumindest eine weitere Stoff ein Waschmittel und/oder Schmutzpartikel umfassen. Die Überflussöffnung kann in Querrichtung im Wesentlichen gegenüber der Fluideinlassöffnung angeordnet sein. Vorteilhafterweise kann damit ein, z.B. durch Fluidverwirbelungen verursachtes, Heraustreten von Fluid bzw. Herausspritzen von Flüssigkeit, verhinderbar sein, indem insbesondere kein direkter gerader Verbindungsweg zwischen den beiden Öffnungen besteht. Vorzugsweise kann die Überflussöffnung in einer Seitenwand des ersten Rohrelements angeordnet sein bzw. das erste Rohrelement kann in einer Seitenwand die Überflussöffnung umfassen. Die Seitenwand des ersten Rohrelements kann insbesondere eine Außenhülle sein, deren Normale zumindest lokal parallel zu der Querrichtung und/oder senkrecht zu der Längsrichtung verläuft.

Gemäß einer Ausführungsform können das erste Rohrelement, das zweite Rohrelement und/oder das dritte Rohrelement zumindest teilweise zylinderförmig ausgebildet sein. Zumindest teilweise kann dabei bedeuten, dass das erste Rohrelement, das zweite Rohrelement und/oder das dritte Rohrelement zumindest abschnittsweise, insbesondere im Bereich ihrer Überschneidung in Längsrichtung, zylinderförmig ausgebildet sein können. Unter dem "Bereich ihrer Überschneidung" ist dabei insbesondere derjenige Abschnitt zu verstehen, mit dem das zweite Rohrelement in dem ersten Rohrelement angeordnet ist und/oder mit dem das dritte Rohrelement in dem zweiten Rohrelement und dem ersten Rohrelement angeordnet ist. Vorzugsweise kann die Mittelachse, zumindest eines zylinderförmigen Abschnitts, des ersten Rohrelements, des zweiten Rohrelements und/oder des dritten Rohrelements im Wesentlichen parallel zu der Längsachse orientiert sein. Das erste Rohrelement, das zweite Rohrelement und/oder das dritte Rohrelement kann zumindest abschnittsweise einen runden, insbesondere kreisförmigen Querschnitt aufweisen, wobei der Querschnitt insbesondere in Längsrichtung im Wesentlichen konstant sein kann. Vorzugsweise kann der Durchmesser des ersten Rohrelements größer sein als der Durchmesser des zweiten Rohrelements. Der Durchmesser des zweiten Rohrelements kann vorzugsweise größer sein als der Durchmesser des dritten Rohrelements. Die Fluideinlassöffnung kann im Vergleich zu der Überflussöffnung in Längsrichtung betrachtet um im Wesentlichen 180° versetzt sein. Mit anderen Worten kann die Fluideinlassöffnung in Bezug zu der Überflussöffnung auf der gegenüberliegenden Seite des durch die Schnittkreisflächen des Zylinders, insbesondere des ersten Rohrelements, definierten Kreises angeordnet sein. Vorteilhafterweise kann mit einer zylinderförmigen Ausführung der Rohrelemente ein vergrößerter Querschnitt des Siphonbereichs, der durch die sich in Längsrichtung überlappenden Rohrelemente gebildet wird, ermöglicht werden. Durch den kreisrunden Querschnitt des so gebildeten Siphons kann ein Durchflusswiderstand gegenüber dem Stand der Technik verringert sein. Zusätzlich kann der Siphon im Vergleich zu Modellen des Standes der Technik kompakter sein. Darüber hinaus kann zumindest eines der Rohrelemente rotationssymmetrisch um die Längsrichtung herum ausgebildet sein. Damit kann eine gleichmäßige Strömung von Fluid durch den Siphon sichergestellt sein und ein Fließwiderstand reduziert sein.

Gemäß einer weiteren Ausführungsform kann der Innendurchmesser des dritten Rohrelements zu dem Innendurchmesser des zweiten Rohrelements und/oder der Innendurchmesser des zweiten Rohrelements zu dem Innendurchmesser des ersten Rohrelements in einem Verhältnis von 0,2 bis 0,95, bevorzugt 0,5 bis 0,85 besonders bevorzugt 0,6 bis 0,8, stehen. Die angegebenen Verhältnisse können, insbesondere bei innerhalb eines Rohrelements variablen Innendurchmessern, vorzugsweise anhand von mittleren Innendurchmessern der Rohrelemente bestimmt sein. Die Verhältnisse der Innendurchmesser können insbesondere die Querschnittsmaße des Fluidwegs durch den Siphon beeinflussen und/oder definieren. Die angegebenen Verhältnisse der Innendurchmesser können dabei günstig sein, indem sie einen Fluidfluss ermöglichen können, der eine Flüssigkeitszufuhr für den Betrieb des Wäschepflegegeräts gut ermöglicht unter gleichzeitiger Berücksichtigung einer möglichst platzsparenden Ausführung. Ein Verhältnis von 0,5 bis 0,85 kann einem Verstopfen des Siphons besonders gut entgegenwirken. Bei einem Verhältnis von 0,6 bis 0,8 kann ein vorteilhafter Strömungsquerschnitt sowie ein guter Druckausgleich zwischen der Fluideinlassöffnung und der Überflussöffnung mit einer nicht zu großen im Siphon gesammelten Flüssigkeitsmenge besonders gut kombinierbar sein.

Gemäß einer weiteren Ausführungsform kann das erste Rohrelement konzentrisch zu dem zweiten Rohrelement und/oder zu dem dritten Rohrelement angeordnet sein. Durch die drei Rohrelemente kann ein rundumlaufender, insbesondere kreisförmiger, Siphon ausgebildet sein. Eine konzentrische Anordnung kann eine besonders gleichmäßige Ausnutzung der Zwischenräume der Rohrelemente ermöglichen, wodurch ein Durchflusswiderstand effektiv verringert werden kann. Zudem kann eine konzentrische Anordnung sicherstellen, dass bei einem Rückstau von Flüssigkeit, ein Flussweg zu der Überflussöffnung als auch zu der Fluideinflussöffnung gleichermaßen gut gewährleistet ist, ohne, dass einerseits unnötig viel Fließwiderstand der durch die Fluideinflussöffnung einfließenden Flüssigkeit erzeugt wird und ohne, dass andererseits ein notfalls nötiges Abfließen durch die Überflussöffnung möglicherweise zu stark behindert ist. Zusätzlich oder alternativ können die Querschnittsflächen des ersten Rohrelements, des zweiten Rohrelements und des dritten Rohrelements parallel zueinander angeordnet sein. Dies kann eine weitere Verbesserung eines gleichmäßigen Durchflussverhaltens ermöglichen. Ferner können durch die runde Form des Siphons auch die Überlaufkanten, um die das Fluid bei einem Durchtritt durch den Siphon, umgelenkt wird, länger sein als bei bekannten U- förmigen oder V-förmigen Siphons aus dem Stand der Technik. Damit kann ein kompakter Siphon mit einem erhöhten Fluiddurchlassvermögen bereitgestellt werden.

Gemäß einer weiteren Ausführungsform kann der Siphon einen Abdeckring umfassen, wobei der Abdeckring an dem zweiten Ende des ersten Rohrelements den Bereich zwischen dem ersten Rohrelement und dem zweiten Rohrelement fluiddicht abdecken kann, wobei der Abdeckring insbesondere die Fluideinlassöffnung umfassen kann. Vorteilhafterweise können das zweite Ende und das Außenende in Längsrichtung gesehen im Wesentlichen der derselben Position angeordnet sein. Zusammen mit der Deckelplatte kann der Außenring den Siphon in Richtung des zweiten Endes, gegebenenfalls mit Ausnahme der Fluideinlassöffnung, vollständig abdecken bzw. den Siphon im installierten Zustand nach oben hin vollständig abdecken, sodass von dem zweiten Ende her bzw. von oben insbesondere nur noch durch die Fluideinlassöffnung etwas in den Siphon eindringen kann. Der Abdeckring kann einen zusätzlichen Schutz gegen ein Austreten von Dampf oder Gas aus dem Siphon darstellen. Zudem kann der Abdeckring einen Schutz gegenüber dem Eindringen von Fremdkörpern in den Siphon darstellen. Der Abdeckring kann ein Teil der oben beschriebenen Haltelasche sein. Ferner kann der Abdeckring integral mit dem ersten Rohrelement ausgebildet sein, um die Anzahl von separater Teile des Siphons gering zu halten.

Gemäß einer weiteren Ausführungsform kann das zweite Rohrelement eine in Längsrichtung zwischen dem Eingangsende und der Deckelplatte angeordnete Belüftungsöffnung umfassen. Die Belüftungsöffnung kann vorzugsweise derart dimensioniert sein, dass ein Austreten von Dampf durch die Belüftungsöffnung im Wesentlichen verhindert wird, zumindest solange kein Überdruck vorherrscht. Eine Erstreckung der Belüftungsöffnung in Längsrichtung kann zu einer Erstreckung des zweiten Rohrelements von der Deckelplatte bis zu dem Siphonenden in einem Verhältnis von 0,01 bis 0,10, bevorzugt 0,05 bis 0,08, stehen. Vorteilhafterweise kann damit ein Austreten von Dampf aus dem Bereich zwischen dem zweiten Rohrelement und dem ersten Rohrelement noch im Wesentlichen verhinderbar sein, während gleichzeitig einem zu starken Aufbau von Druck in diesem Bereich entgegengewirkt werden kann. Die Belüftungsöffnung kann auf einer der Überflussöffnung abgewandten Seite des zweiten Rohrelements angeordnet sein. Die Belüftungsöffnung kann in Längsrichtung direkt anschließend an die Deckelplatte angeordnet sein. Die Belüftungsöffnung kann einen Verschließmechanismus zum Verschließen der Belüftungsöffnung umfassen. Der Verschließmechanismus kann dazu ausgestaltet sein, automatisch verschließbar mittels eines Steuerungsmechanismus zu sein, und/oder den Steuerungsmechanismus umfassen. Eine verschließbare Belüftungsöffnung kann beispielsweise vorteilhaft sein, um bei einer Ozonbehandlung von Wäsche durch Verschließen der Belüftungsöffnung ein Austreten von Ozon aus der Belüftungsöffnung zu verhindern. Die Belüftungsöffnung kann durch ein Rückschlagventil realisiert sein. Damit kann eine besondes einfach Ausgestaltung geschaffen werden.

Gemäß einer weiteren Ausführungsform können das zweite Rohrelement und das erste Rohrelement als separate Bauteile ausgebildet sein. Vorteilhafterweise kann durch eine separate Ausführung einerseits die Herstellung erleichtert sein und andererseits die Wartung des Siphons erleichtert sein. So können das erste Rohrelement und das zweite Rohrelement als Spritzgussteile realisiert sein, wodurch eine effiziente Herstellung des Siphons möglich ist. Zur Verbindung des ersten Rohrelements mit dem zweiten Rohrelement kann das zweite Rohrelement eine Haltelasche aufweisen und/oder das erste Rohrelement kann einen Vorsprung aufweisen. Das zweite Rohrelement und/oder das erste Rohrelement können zumindest ein Fixierelement, beispielsweise eine Rastnase und/oder eine Ausnehmung, aufweisen, das dazu ausgelegt ist, eine Rotationsorientierung des ersten Rohrelements zu dem zweiten Rohrelements um eine Rotationsachse parallel zu der Längsachse festzulegen. Vorteilhafterweise kann somit eine feste Rotationsposition der beiden Rohrelement zueinander im zusammengesetzten Zustand festgelegt sein. Das dritte Rohrelement und das erste Rohrelement können ein integrales Bauteil sein. Somit kann der Siphon aus nur zwei separaten Bauteilen zusammengesetzt sein, was einen Zusammenbau des Siphons einfach hält und dennoch ermöglicht parallele Strukturen des Siphons im Spritzgussverfahren herzustellen.

Gemäß einer weiteren Ausführungsform kann der Öffnungsquerschnitt der Fluideinlassöffnung geringer sein als der Öffnungsquerschnitt der Überflussöffnung, wobei die Flächen der Öffnungsquerschnitte insbesondere in einem Verhältnis von 0,2 bis 0,8, bevorzugt 0,4 bis 0,6, besonders bevorzugt 0,45 bis 0,55, stehen. Vorteilhafterweise kann somit sichergestellt sein, dass ein Eindringen von Fluid oder Flüssigkeit, insbesondere von verschmutzen Wasser, in die Fluideinlassöffnung durch die Überflussöffnung zuverlässig verhindert wird. Die gegebenen Verhältnisse haben sich dabei als besonders effizient herausgestellt um einen ausreichenden Ausgangsweg für rückfließende Flüssigkeit zu ermöglichen. Ein Verhältnis von 0,4 bis 0,6 ist zudem besonders günstig, um einem Ausgleich von Unterdruck in der Zuflussleitung zu dienen. Ein Verhältnis von 0,45 bis 0,55 kann diese beiden Eigenschaften weiter optimieren und zudem klein genug sein, um ein Eindringen von Partikeln und Schmutz von außen in den Siphon zu unterbinden. Vorteilhafterweise kann die Überflussöffnung dazu ausgestaltet sein, eine Durchflussrate von zumindest 11 l/min bevorzugt zumindest 16 I/min zu ermöglichen. Damit kann der Siphon auch bei hohen Durchflussraten eingesetzt sein.

Gemäß einer weiteren Ausführungsform kann in Längsrichtung gesehen eine Erstreckung der Überflussöffnung zu einem Abstand des ersten Endes von dem zweiten Ende in einem Verhältnis von 0,05 bis 0,5, bevorzugt 0,1 bis 0,3 besonders bevorzugt 0,15 bis 0,25 stehen. Ein solches Verhältnis kann besonders vorteilhaft sein hinsichtlich der Funktionalität der Überflussöffnung, insbesondere hinsichtlich des Zwecks ein Rückfließen über die Fluideinlassöffnung in eine Zuleitung zu verhindern. Bei einem Verhältnis von 0,1 bis 0,3, insbesondere bei 0,15 bis 0,25 ist diese Funktionalität jeweils weiter verbessert. Ein Verhältnis im Bereich von 0,1 bis 0,3 kann zudem eine besonders effiziente Raumaufteilung der Komponenten des Siphons ermöglichen, indem zum Beispiel die Erstreckung des dritten Rohrelements innerhalb des ersten Rohrelements besonders gut gewählt sein kann. Ein Verhältnis von 0,15 bis 0,25 kann darüber hinaus eine besonders gute Anpassung an günstige Größen der Querschnitte der Fluideinlassöffnung und/oder des Eingangsendes des dritten Rohrelements ermöglichen.

Gemäß einem weiteren Aspekt der vorliegenden Erfindung wird ein Wäschepflegegerät umfassend einen erfindungsgemäßen Siphon wie hierin beschrieben bereitgestellt. Die Merkmale und Vorteile, die für den Siphon beschrieben worden sind, gelten in entsprechender Weise analog für das Wäschepflegegerät und andersrum. Das Wäschepflegegerät kann vorzugsweise einen Behandlungsraum zur Behandlung von Wäsche umfassen. Der Behandlungsraum kann insbesondere eine Wäschetrommel umfassen. Der Siphon kann vorzugsweise fluidisch mit dem Behandlungsraum verbunden sein. Das Wäschepflegegerät kann eine Fluidleitung umfassen, wobei die Fluidleitung den Siphon fluidisch mit dem Behandlungsraum verbindet. Die Fluidleitung kann insbesondere an das Ausgangsende des dritten Rohrelements angeschlossen sein. Vorzugsweise ist der Siphon derart in dem Wäschepflegegerät angeordnet, dass die Fluidleitung zu dem Behandlungsraum in Längsrichtung gesehen jenseits dem Ausgangsende des Rohrelements verläuft. Das Wäschepflegegerät kann einen Dichtmanschette und eine Tür, welche dazu ausgestaltet ist, eine Zugangsöffnung zu dem Behandlungsraum fluiddicht zu verschließen und freizugeben, umfassen. Die Dichtmanschette kann einen Zugangsweg zu dem Behandlungsraum umfassen, wobei insbesondere die Fluidleitung über den Zugangsweg der Dichtmanschette an den Behandlungsraum angeschlossen sein kann. Vorzugsweise kann der Zugangsweg an einer im ordnungsgemäß aufgestellten Zustand oberen Hälfte des Behandlungsraums angeordnet sein. Der Zugangsweg der Dichtmanschette kann vorzugsweise im ordnungsgemäß aufgestellten Zustand des Wäschepflegegeräts unterhalb von dem Siphon und/oder in Längsrichtung jenseits des Ausgangsendes des dritten Rohrelements angeordnet sein. Zusätzlich oder alternativ kann der Siphon in Querrichtung gesehen in einem Randbereich des Wäschepflegegeräts angeordnet sein. Ein Randbereich kann insbesondere derjenige Bereich sein, der sich in Querrichtung von einem Ende des Wäschepflegegeräts bis zu maximal 25% der Erstreckung des Wäschepflegegeräts erstreckt. Im ordnungsgemäß aufgestellten Zustand des Wäschepflegegeräts kann, bei Blick auf die Vorderseite des Wäschepflegegeräts bzw. auf die Tür zum Behandlungsraum des Wäschepflegegeräts der Siphon vorne oben links angeordnet sein. Das Wäschepflegegerät kann ein automatisches Waschmittel-Dosiersystem und/oder einen Waschmittelvorratsbehälter umfassen, wobei es insbesondere vorgesehen sein kann, dass das Wäschepflegegerät keine Waschmittelschublade umfasst.

Die Erfindung ist auch auf eine Verwendung eines erfindungsgemäßen Siphons wie hierin beschrieben für ein Wäschepflegegerät ausgerichtet. Die Merkmale und Vorteile, die für den Siphon und das Wäschepflegegerät beschrieben worden sind, gelten in entsprechender Weise analog für die Verwendung und andersrum. Eine Anordnung des Siphons kann beispielsweise an einem Ort vorgesehen sein, an dem üblicherweise eine Waschmittelschublade vorgesehen ist oder der direkt unter einer Waschmittelschublade ist.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Die folgende Beschreibung dient lediglich der Verdeutlichung der Erfindung und sollte nicht derart aufgefasst werden, dass durch sie die beiliegenden Ansprüche auf eine der Ausführungsformen beschränkt werden. Einzelne Merkmale der einzelnen Ausführungsform können dabei im Rahmen der Erfindung miteinander kombiniert werden. Es zeigen
- **Fig. 1**: eine Perspektivansicht auf einen Siphon gemäß einer ersten Ausführungsform der Erfindung,
- **Fig. 2**: eine Perspektivansicht auf eine Schnittdarstellung eines Siphons gemäß der ersten Ausführungsform der Erfindung,
- **Fig. 3**: eine Perspektivansicht auf ein zweites Rohrelement gemäß einer zweiten Ausführungsform der Erfindung,
- **Fig. 4**: eine Perspektivansicht auf ein erstes Rohrelement zusammen mit einem dritten Rohrelement gemäß der zweiten Ausführungsform der Erfindung,
- **Fig. 5**: eine Seitenansicht auf ein zweites Rohrelement gemäß einer dritten Ausführungsform der Erfindung,
- **Fig. 6**: eine Seitenansicht auf ein erstes Rohrelement zusammen mit einem dritten Rohrelement gemäß der dritten Ausführungsform der Erfindung,
- **Fig. 7**: eine Perspektivansicht auf einen Siphon zusammen mit einer Fluidleitung gemäß einer weiteren Ausführungsform der Erfindung und
- **Fig. 8**: eine Perspektivansicht auf ein Wäschepflegegerät gemäß einer weiteren Ausführungsform der Erfindung bei dem Seitenwände durchsichtig dargestellt sind.

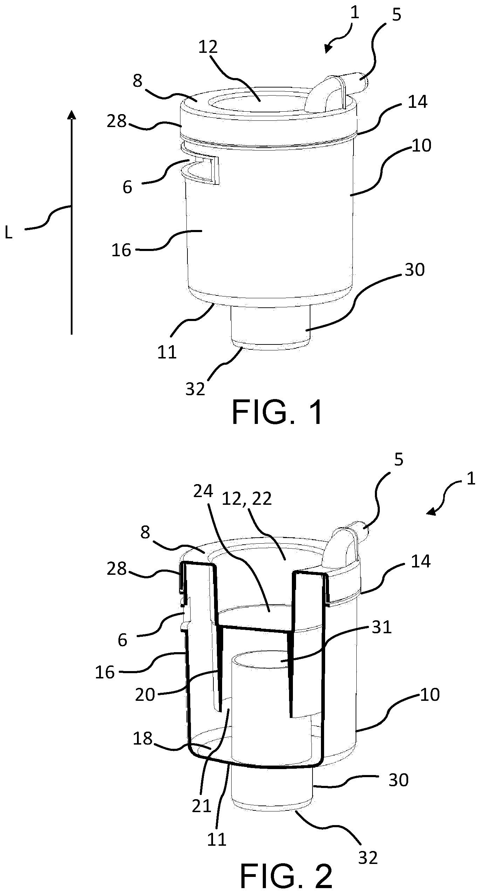

In **Figur 1** ist eine Perspektivansicht auf einen Siphon 1 gemäß einer ersten Ausführungsform der Erfindung gezeigt. Zum besseren Einblick in den Innenbereich ist zudem in **Figur 2** eine Perspektivansicht auf eine Schnittdarstellung des Siphons 1 gemäß der ersten Ausführungsform der Erfindung gezeigt. Der Siphon umfasst ein äußeres erstes Rohrelement 10, ein darin angeordnetes zweites Rohrelement 20 sowie ein teilweise bzw. abschnittsweise in dem zweiten Rohrelement 20 und dem ersten Rohrelement 10 angeordnetes drittes Rohrelement 30. Die Rohrelemente 10, 20, 30 sind zylinderförmig ausgebildet, im Wesentlichen konzentrisch angeordnet und so orientiert, dass sich ihre gemeinsame Mittelachse parallel zu einer Längsrichtung L erstreckt. Das zweite Rohrelement 20 sitzt mittels einer umlaufenden Haltelasche 28 auf dem ersten Rohrelement 10 und ist dabei zusätzlich durch eine umlaufenden Vorsprung 14 des ersten Rohrelements 10 gesichert. Das erste Rohrelement 10 und das zweite Rohrelement 20 können dabei fest miteinander verbunden sein oder alternativ als separate Bauteile ausgebildet sein. Der Siphon 1 umfasst einen Abdeckring 8, welcher den Bereich zwischen dem ersten Rohrelement 10 und dem zweiten Rohrelement 20 an dem zweiten Ende 12 des ersten Rohrelements bzw. dem Außenende 24 des zweiten Rohrelements 20 abdeckt und der Teil der Haltelasche 28 ist. Der Abdeckring 8 umfasst eine Fluideinlassöffnung 4 (hier nicht zu sehen), an die ein Zuleitungsrohrabschnitt 5 angeschlossen ist. Über den Zuleitungsrohrabschnitt 5 und die Fluideinlassöffnung 4 kann dem Siphon 1, eine Flüssigkeit, insbesondere Wasser, zugeführt werden. Die Flüssigkeit wird dabei in dem Bereich zwischen dem ersten Rohrabschnitt 10 und dem zweiten Rohrabschnitt in etwa parallel zu der Längsrichtung L bzw. der Schwerkraft folgend nach unten geleitet, bis sie auf eine Bodenplatte 18 trifft. Das dritte Rohrelement 30 erstreckt sich fluidabdichtend durch eine Bodenöffnung der Bodenplatte 18. An der Bodenplatte 18 sammelt sich die Flüssigkeit und steigt durch den Druck nachkommender Flüssigkeit in dem Bereich zwischen dem zweiten Rohrelement 20 und dem dritten Rohrelement 30, welcher an dem Siphonende 21 des zweiten Rohrelements 20 beginnt, auf. Der für die Wasserleitung zur Verfügung stehende Leitungsweg in dem Siphon 1 weist dabei sowohl zwischen dem ersten Rohrelement 10 und dem zweiten Rohrelement 20 als auch zwischen dem zweiten Rohrelement 20 und dem dritten Rohrelement 30 einen kreisringförmigen Querschnitt auf. Dadurch kann eine besonders effiziente Wasserleitung erreicht werden, indem ein großer Querschnitt mit einem geringen Strömungswiderstand und einem dafür nur geringen Platzbedarf kombiniert werden kann. Sobald der Pegel der Flüssigkeit zwischen dem zweiten Rohrelement 20 und dem dritten Rohrelement 30 soweit angestiegen ist, dass das Eingangsende 31 des dritten Rohrelements 30 erreicht bzw. überschritten wird, kann die Flüssigkeit in das Innere des dritten Rohrelements 30 fließen und durch dieses über das Ausgangsende 32 beispielsweise an eine anschließende Fluidleitung 7 und/oder einen Behandlungsraum 3 eines Wäschepflegegeräts 2 weitergeleitet werden. Durch eine Deckelplatte 24, und die Seitenwände des zweiten Rohrelements 20 wird ein Bereich gebildet in dem sich aus dem dritten Rohrelement kommende warme/heiße Dämpfe oder Gase sammeln können. Diese werden vorteilhafterweise durch die Deckelplatte 24 an einem weiteren Aufsteigen gehindert. Da der zwischen dem zweiten Rohrelement 20 und dem dritten Rohrelement 30 gebildete Fluidweg nach unten führt und/oder da sich in diesem Bereich aus der Fluideinlassöffnung kommende Flüssigkeit angesammelt hat, werden diese Dämpfe bzw. Gase in diesem Bereich festgehalten. Der Siphon 1 kann damit die generelle Aufgabe eines Siphons gemäß dem Stand der Technik erfüllen, wobei er die erwähnten Vorteile aufweisen kann. Der Siphon 1 weist zusätzlich eine Überflussöffnung 6 in der Seitenwand 16 des ersten Rohrelements 10 auf. Die Überflussöffnung 6 ist in Längsrichtung L gesehen zwischen dem Eingangsende 31 des dritten Rohrelements 30 und der Fluideinlassöffnung 4 bzw. dem Zuleitungsrohrabschnitt 5 angeordnet. Sie dient dem Zweck, dass bei Rückstau, z.B. aufgrund einer verstopften Abwasserleitung, wenn Flüssigkeit in dem Siphon ansteigt, diese zunächst zu der Überflussöffnung 6 gelangt bevor die Fluideinlassöffnung 4 erreicht werden kann. Zudem kann, bei einem Unterdruck in dem Zuleitungsrohrabschnitt 5 bzw. in einer Wasserzuleitung des Wäschepflegegeräts 2, insbesondere in der Grundwasserversorgung eines Gebäudes und/oder Haushalts, verhindert werden, dass Flüssigkeit, insbesondere Schmutzwasser über das dritte Rohrelement 30 in den Zuleitungsrohrabschnitt 6 und darüber in die Wasserzuleitung bzw. die Grundwasserversorgung gesaugt wird. Der Unterdruck kann nämlich durch die Überflussöffnung 6 ausgeglichen werden. Vorteilhafterweise kann somit insbesondere eine Kontamination der Grundwasserversorgung verhindert werden. Der Öffnungsquerschnitt der Fluideinlassöffnung 4 ist geringer als der Öffnungsquerschnitt der Überflussöffnung 6 und die Fluideinlassöffnung 4 ist in Querrichtung gegenüberliegend der Überflussöffnung 6 angeordnet.

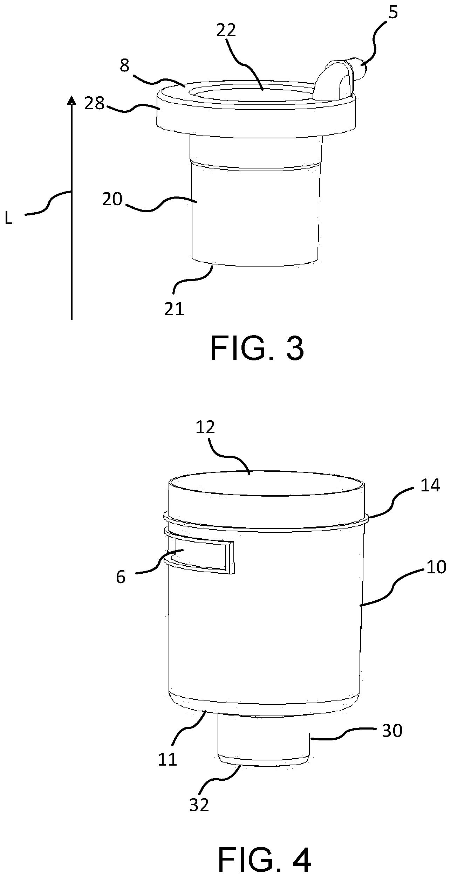

Die **Figur 3** zeigt eine Perspektivansicht auf ein zweites Rohrelement 20 gemäß einer zweiten Ausführungsform der Erfindung und die **Figur 4** zeigt eine Perspektivansicht auf ein zugehöriges erstes Rohrelement 10 zusammen mit einem dritten Rohrelement 30 gemäß der zweiten Ausführungsform der Erfindung. Das zweite Rohrelement 20 und das erste Rohrelement 10 sind hier als separate Bauteile ausgeführt, welche mittels der umlaufenden Haltelasche 28 des zweiten Rohrelements 20 und dem umlaufenden Vorsprung 14 des ersten Rohrelements 10 miteinander verbunden werden können. Eine separate Ausbildung dieser beiden Rohrelemente 10, 20 kann eine vereinfachte Herstellung und/oder eine vereinfachte Wartung des Siphons 1 ermöglichen. Das erste Rohrelement 10 kann einstückig mit dem dritten Rohrelement 30 ausgebildet sein und/oder beispielsweise mit dem dritten Rohrelement 30 verschweißt sein. Der hier gezeigte Siphon 1 kann ansonsten analog zu der in den Figuren 1 und 2 gezeigten Ausführungsformen ausgebildet sein.

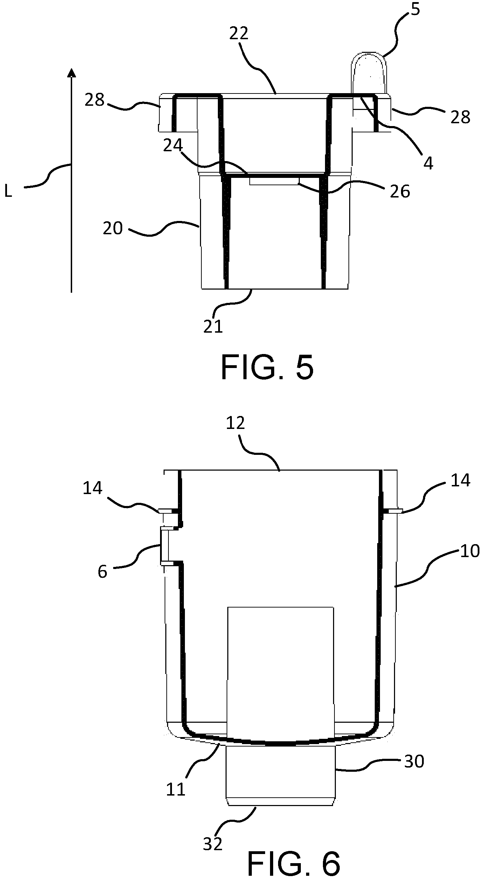

Die **Figur 5** zeigt eine Seitenansicht auf ein zweites Rohrelement 20 gemäß einer dritten Ausführungsform der Erfindung und die **Figur 6** zeigt eine Seitenansicht auf ein erstes Rohrelement 10 zusammen mit einem dritten Rohrelement 30 gemäß der dritten Ausführungsform der Erfindung. Auch in dieser Ausführungsform sind das erste Rohrelement 10 und das zweite Rohrelement 20 separat ausgeführt. Das zweite Rohrelement 20 weist zudem eine Belüftungsöffnung 26 auf, die direkt unterhalb der Deckelplatte 24 bzw. in Längsrichtung L direkt anschließend an die Deckelplatte 24 angeordnet ist. Die Belüftungsöffnung 26 kann dazu dienen, einem Aufbau von Überdruck in dem Bereich unterhalb der Deckelplatte 24 entgegenzuwirken. Die Belüftungsöffnung 26 ist relativ klein dimensioniert bzw. weist eine geringe Querschnittsöffnung auf, sodass ein Austreten von größeren Mengen an Dampf, zumindest bei nicht vorhandenem Überdruck verhindert werden kann. Die gezeigte dritte Ausführungsform kann hinsichtlich ihrer weiteren Merkmale der in den Figuren 1 und 2 gezeigten ersten Ausführungsform und/oder den in den Figuren 3 und 4 gezeigten zweiten Ausführungsform entsprechen.

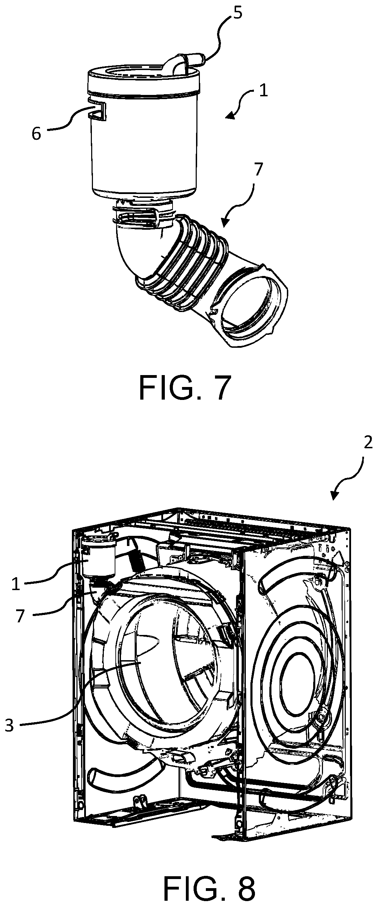

Die **Figur 7** zeigt eine Perspektivansicht auf einen Siphon 1 zusammen mit einer Fluidleitung 7 gemäß einer weiteren Ausführungsform der Erfindung. Der Siphon 1 kann gemäß einer der in den Figuren 1 bis 6 gezeigten Ausführungsformen ausgebildet sein. Die Fluidleitung 7 ist an das dritten Rohrelement 30 angeschlossen und dazu ausgestaltet, eine Flüssigkeit, insbesondere Wasser oder ein Wassergemisch, von dem Siphon 1 an einen Behandlungsraum 3 eines Wäschepflegegeräts 2 zu leiten.

Die **Figur 8** zeigt eine Perspektivansicht auf ein Wäschepflegegerät 2 gemäß einer weiteren Ausführungsform der Erfindung bei dem Seitenwände sowie weitere Komponenten zur besseren Einsicht in das Innere durchsichtig bzw. transparent dargestellt sind. Das Wäschepflegegerät 2 umfasst einen erfindungsgemäßen Siphon 1 welcher in einer vorderen linken oberen Ecke des Wäschepflegegeräts 2 angeordnet ist. Der Siphon 1 ist über eine Fluidleitung 7 sowie über eine Dichtmanschette einer Tür des Behandlungsraums 3 des Wäschepflegegeräts 2 fluidisch mit dem Behandlungsraum 3 verbunden.

### Bezugszeichenliste:

- 1: Siphon
- 2: Wäschepflegegerät
- 3: Behandlungsraum
- 4: Fluideinlassöffnung
- 5: Zuleitungsrohrabschnitt
- 6: Überflussöffnung
- 7: Fluidleitung
- 8: Abdeckring
- 10: erstes Rohrelement
- 11: erstes Ende
- 12: zweites Ende
- 14: Vorsprung
- 16: Seitenwand des ersten Rohrelements
- 18: Bodenplatte
- 20: zweites Rohrelement
- 21: Siphonende
- 22: Außenende
- 24: Deckelplatte
- 26: Belüftungsöffnung
- 28: Haltelasche
- 30: drittes Rohrelement
- 31: Eingangsende
- 32: Ausgangsende
- L: Längsrichtung

## Patentansprüche

1. Siphon (1), vorgesehen für die Anordnung in einem Wäschepflegegerät (2), umfassend
- ein erstes Rohrelement (10) umfassend in einer Längsrichtung (L) ein erstes Ende (11) und ein zweites Ende (12),
- ein zumindest abschnittsweise in dem ersten Rohrelement (10) angeordnetes und/oder anordenbares zweites Rohrelement (20) mit einem dem ersten Ende (11) zugewandten und von diesem beabstandeten Siphonende (21) und einem dem Siphonende (21) gegenüberliegenden Außenende (22),
- eine in dem zweiten Rohrelement (20) zwischen dem Siphonende (21) und dem Außenende (22) angeordnete und das zweite Rohrelement (20) abdichtende Deckelplatte (24),
- ein zumindest abschnittsweise in dem ersten Rohrelement (10) und zumindest abschnittsweise in dem zweiten Rohrelement (20) angeordnetes drittes Rohrelement (30) mit einem dem zweiten Ende (12) und der Deckelplatte (24) zugewandten und von der Deckelplatte (24) beabstandeten Eingangsende (31) einem dem Eingangsende (31) gegenüberliegenden Ausgangsende (32), und
- eine in einen Bereich zwischen dem ersten Rohrelement (10) und dem zweiten Rohrelement (20) führende Fluideinlassöffnung (4) sowie eine aus diesem Bereich führende Überflussöffnung (6),
- wobei das erste Rohrelement (10) an seinem ersten Ende (11) eine Bodenplatte (18) mit einer Bodenöffnung umfasst,
- wobei sich das dritte Rohrelement (30) fluidabdichtend durch die Bodenöffnung erstreckt,
**dadurch gekennzeichnet, daß**
- die Überflussöffnung (6) in Längsrichtung (L) gesehen zwischen dem Eingangsende (31) des dritten Rohrelements (30) und der Fluideinlassöffnung (4) angeordnet ist.

2. Siphon (1) gemäß Anspruch 1,
- wobei das erste Rohrelement, das zweite Rohrelement (20) und/oder das dritte Rohrelement (30) zumindest teilweise zylinderförmig ausgebildet sind.

3. Siphon (1) gemäß einem der vorhergehenden Ansprüche,
- wobei der Innendurchmesser des dritten Rohrelements zu dem Innendurchmesser des zweiten Rohrelements und/oder der Innendurchmesser des zweiten Rohrelements zu dem Innendurchmesser des ersten Rohrelements in einem Verhältnis von 0,2 bis 0,95, bevorzugt 0,5 bis 0,85 besonders bevorzugt 0,6 bis 0,8, stehen.

4. Siphon (1) gemäß einem der vorhergehenden Ansprüche,
- wobei das erste Rohrelement (10) konzentrisch zu dem zweiten Rohrelement (20) und/oder zu dem dritten Rohrelement (30) angeordnet ist.

5. Siphon (1) gemäß einem der vorhergehenden Ansprüche, umfassend einen Abdeckring (8),
- wobei der Abdeckring (8) an dem zweiten Ende (12) des ersten Rohrelements den Bereich zwischen dem ersten Rohrelement (10) und dem zweiten Rohrelement (20) fluiddicht abdeckt,
- wobei der Abdeckring (8) insbesondere die Fluideinlassöffnung (4) umfasst.

6. Siphon (1) gemäß einem der vorhergehenden Ansprüche,
- wobei das zweite Rohrelement (20) eine in Längsrichtung (L) zwischen dem Eingangsende (31) und der Deckelplatte (24) angeordnete Belüftungsöffnung (26) umfasst.

7. Siphon (1) gemäß einem der vorhergehenden Ansprüche,
- wobei das zweite Rohrelement (20) und das erste Rohrelement (10) als separate Bauteile ausgebildet sind.

8. Siphon (1) gemäß einem der vorhergehenden Ansprüche,
- wobei der Öffnungsquerschnitt der Fluideinlassöffnung (4) geringer ist als der Öffnungsquerschnitt der Überflussöffnung (6),
- wobei die Flächen der Öffnungsquerschnitte insbesondere in einem Verhältnis von 0,2 bis 0,8, bevorzugt 0,4 bis 0,6, besonders bevorzugt 0,45 bis 0,55, stehen.

9. Siphon (1) gemäß einem der vorhergehenden Ansprüche,
- wobei in Längsrichtung (L) gesehen eine Erstreckung der Überflussöffnung (6) zu einem Abstand des ersten Endes (11) von dem zweiten Ende (12) in einem Verhältnis von 0,05 bis 0,5, bevorzugt 0,1 bis 0,3 besonders bevorzugt 0,15 bis 0,25 steht.

10. Wäschepflegegerät (2) umfassend einen Siphon (1) gemäß einem der vorhergehenden Ansprüche.

## Claims

1. Siphon (1), provided for arrangement in a laundry care appliance (2), comprising
- a first tube element (10) comprising a first end (11) and a second end (12) in a longitudinal direction (L),
- a second tube element (20), which is and/or can be arranged in the first tube element (10), at least in sections, with a siphon end (21) that faces towards the first end (11) and is spaced apart therefrom and an outer end (22) that lies opposite the siphon end (21),
- a lid plate (24), which is arranged in the second tube element (20) between the siphon end (21) and the outer end (22) and seals off the second tube element (20),
- a third tube element (30), which is arranged in the first tube element (10), at least in sections, and in the second tube element (20), at least in sections, with an input end (31) that faces towards the second end (12) and the lid plate (24) and is spaced apart from the lid plate (24) and an output end (32) that lies opposite the input end (31), and
- a fluid inlet opening (4) which leads into a region between the first tube element (10) and the second tube element (20) as well as an overflow opening (6) which leads out of said region,
- wherein the first tube element (10) comprises a base plate (18) with a base opening at its first end (11),
- wherein the third tube element (30) extends through the base opening in a fluid-tight manner,
**characterised in that**
- the overflow opening (6) is arranged between the input end (31) of the third tube element (30) and the fluid inlet opening (4), when viewed in the longitudinal direction (L).

2. Siphon (1) according to claim 1,
- wherein the first tube element, the second tube element (20) and/or the third tube element (30) are embodied as at least partially cylindrical.

3. Siphon (1) according to one of the preceding claims,
- wherein the inner diameter of the third tube element has a ratio of 0.2 to 0.95, preferably 0.5 to 0.85, particularly 0.6 to 0.8, in relation to the internal diameter of the second tube element, as does the internal diameter of the second tube element in relation to the internal diameter of the first tube element.

4. Siphon (1) according to one of the preceding claims,
- wherein the first tube element (10) is arranged concentrically in relation to the second tube element (20) and/or the third tube element (30).

5. Siphon (1) according to one of the preceding claims, comprising a cover ring (8),
- wherein the cover ring (8) covers the region between the first tube element (10) and the second tube element (20) in a fluid-tight manner at the second end (12) of the first tube element,
- wherein the cover ring (8) in particular comprises the fluid inlet opening (4).

6. Siphon (1) according to one of the preceding claims,
- wherein the second tube element (20) comprises a ventilation opening (26) that is arranged between the input end (31) and the lid plate (24) in the longitudinal direction (L).

7. Siphon (1) according to one of the preceding claims,
- wherein the second tube element (20) and the first tube element (10) are embodied as separate components.

8. Siphon (1) according to one of the preceding claims,
- wherein the opening cross-section of the fluid inlet opening (4) is less than the opening cross-section of the overflow opening (6),
- wherein the areas of the opening cross-sections in particular have a ratio of 0.2 to 0.8, preferably 0.4 to 0.6, particularly preferably 0.45 to 0.55.

9. Siphon (1) according to one of the preceding claims,
- wherein an extension of the overflow opening (6) has a ratio of 0.005 to 0.5, preferably 0.1 to 0.3, particularly preferably 0.15 to 0.25, in relation to a spacing between the first end (11) and the second end (12), when viewed in the longitudinal direction (L).

10. Laundry care appliance (2) comprising a siphon (1) according to one of the preceding claims.

## Revendications

1. Siphon (1), prévu pour être disposé dans un appareil d'entretien du linge (2), comprenant
- un premier élément tubulaire (10) comprenant, dans une direction longitudinale (L), une première extrémité (11) et une deuxième extrémité (12),
- un deuxième élément tubulaire (20) disposé et/ou pouvant être disposé au moins par sections dans le premier élément tubulaire (10), avec une extrémité de siphon (21) dirigée vers la première extrémité (11) et espacée de celle-ci et une extrémité extérieure (22) opposée à l'extrémité de siphon (21),
- une plaque de recouvrement (24) disposée dans le deuxième élément tubulaire (20) entre l'extrémité de siphon (21) et l'extrémité extérieure (22) et assurant l'étanchéité du deuxième élément tubulaire (20),
- un troisième élément tubulaire (30) disposé au moins par sections dans le premier élément tubulaire (10) et au moins par sections dans le deuxième élément tubulaire (20), avec une extrémité d'entrée (31) dirigée vers la deuxième extrémité (12) et la plaque de recouvrement (24) et espacée de la plaque de recouvrement (24), et une extrémité de sortie (32) opposée à l'extrémité d'entrée (31), et
- un orifice d'entrée de fluide (4) menant à une zone située entre le premier élément tubulaire (10) et le deuxième élément tubulaire (20), ainsi qu'un orifice de trop-plein (6) menant hors de cette zone,
- dans lequel le premier élément tubulaire (10) comprend, en sa première extrémité (11), une plaque de fond (18) avec un orifice de fond,
- dans lequel le troisième élément tubulaire (30) s'étend de façon étanche aux fluides à travers l'orifice de fond,
**caractérisé en ce que**
- vu en direction longitudinale (L), l'orifice de trop-plein (6) est disposé entre l'extrémité d'entrée (31) du troisième élément tubulaire (30) et l'orifice d'entrée de fluide (4).

2. Siphon (1) selon la revendication 1,
- dans lequel le premier élément tubulaire, le deuxième élément tubulaire (20) et/ou le troisième élément tubulaire (30) sont réalisés au moins partiellement sous forme cylindrique.

3. Siphon (1) selon l'une des revendications précédentes,
- dans lequel le diamètre intérieur du troisième élément tubulaire par rapport au diamètre intérieur du deuxième élément tubulaire et/ou le diamètre intérieur du deuxième élément tubulaire par rapport au diamètre intérieur du premier élément tubulaire se trouve(nt) dans un rapport de 0,2 à 0,95, de préférence de 0,5 à 0,85, de façon particulièrement préférée de 0,6 à 0,8.

4. Siphon (1) selon l'une des revendications précédentes,
- dans lequel le premier élément tubulaire (10) est disposé de façon concentrique par rapport au deuxième élément tubulaire (20) et/ou au troisième élément tubulaire (30).

5. Siphon (1) selon l'une des revendications précédentes, comprenant une bague de recouvrement (8),
- dans lequel la bague de recouvrement (8) recouvre, sur la deuxième extrémité (12) du premier élément tubulaire, de façon étanche aux fluides, la zone entre le premier élément tubulaire (10) et le deuxième élément tubulaire (20),
- dans lequel la bague de recouvrement (8) comprend en particulier l'orifice d'entrée de fluide (4).

6. Siphon (1) selon l'une des revendications précédentes,
- dans lequel le deuxième élément tubulaire (20) comprend un orifice d'aération (26) disposé en direction longitudinale (L) entre l'extrémité d'entrée (31) et la plaque de recouvrement (24).

7. Siphon (1) selon l'une des revendications précédentes,
- dans lequel le deuxième élément tubulaire (20) et le premier élément tubulaire (10) sont formés sous la forme de composants séparés.

8. Siphon (1) selon l'une des revendications précédentes,
- dans lequel la section transversale d'ouverture de l'orifice d'entrée de fluide (4) est inférieure à la section transversale d'ouverture de l'orifice de trop-plein (6),
- dans lequel les surfaces des sections transversales d'ouverture se trouvent en particulier dans un rapport de 0,2 à 0,8, de préférence de 0,4 à 0,6, de façon particulièrement préférée de 0,45 à 0,55.

9. Siphon (1) selon l'une des revendications précédentes,
- dans lequel, vu en direction longitudinale (L), une extension de l'orifice de trop-plein (6) par rapport à un écartement entre la première extrémité (11) et la deuxième extrémité (12) se trouve dans un rapport de 0,05 à 0,5, de préférence de 0,1 à 0,3, de façon particulièrement préférée de 0,15 à 0,25.

10. Appareil d'entretien du linge (2) comprenant un siphon (1) selon l'une des revendications précédentes.
